# EUROPÄISCHE PATENTSCHRIFT

(11) **EP 0 500 558 B1**
(45) Veröffentlichungstag und Bekanntmachung des Hinweises auf die Patenterteilung: **18.08.1993**
(21) Anmeldenummer: 90914903.1
(22) Anmeldetag: 17.10.1990
(51) Int. Cl.: B60V 1/22

(54) **BODENEFFEKT-FAHRZEUG**
WING-IN-GROUND-EFFECT VEHICLE
VEHICULE A EFFET DE SOL

(30) Priorität: 09.11.1989 DE 3937240
(43) Veröffentlichungstag der Anmeldung: 02.09.1992
(73) Patentinhaber: Blum, Klaus, 9400 Rorschacherberg (CH)
(72) Erfinder: Blum, Albert, D-5204 Lohmar 1 (DE)
(74) Vertreter: Lippert, Hans-Joachim, Dipl.-Ing.
(86) Internationale Anmeldenummer: DE9000792
(87) Internationale Veröffentlichungsnummer: WO9107300

(56) Entgegenhaltungen:
- DE-A- 2 543 716
- GB-A- 936 763
- US-A- 3 244 246

## Beschreibung

Die Erfindung betrifft ein schwimmfähiges Bodeneffekt-Fahrzeug mit mindestens einem Schuberzeuger und einer langgestreckten Kabine, die für eine größere Anzahl von Fahrgästen ausgebildet ist, welche auf einem bootsartigen Schwimmer sitzt bzw. als Bootskörper ausgebildet ist, und an welcher in gleichmäßigen Abständen über die Länge verteilt beiderseitig angeordnete Flügelstummel vorgesehen sind, die an ihrer Unterseite einen Luftstauraum umschließen.

Ein gattungsgemäßes Bodeneffekt-Fahrzeug ist z.B. aus der GB-A-936 763 bekannt. Die GB-A-936 763 beschreibt ein schwimmfähiges Bodeneffekt-Fahrzeug der eingangs genannten Art, welches seitliche Flügelstummel aufweist, die bei schneller Fahrt aerodynamische Auftriebskräfte erzeugen. Der Vortrieb des Fahrzeugs wird durch Propellerantriebe oberhalb der Fahrgastkabine am unteren Teil des Fahrzeugs erzeugt. Ein Nachteil dieser Konstruktion ist es, daß der Bodeneffekt sich bei diesem Fahrzeug erst ab einer gewissen Geschwindigkeit über der Wasseroberfläche einstellt, und daß daher der Energieverbrauch des Fahrzeugs bis zum wirksam werden des Bodeneffektes relativ hoch ist.

Ein anderes Bodeneffekt-Fahrzeug ist aus der US-A-3 244 246 bekannt. Bei diesem Bodeneffekt-Fahrzeug sind zwei Rümpfe vorgesehen, die über flügelartige Gebilde miteinander verbunden sind. Die Hauptantriebe liegen am Ende des Fahrzeugs oberhalb der Fahrzeugkabinen. An den flügelartigen Gebilden sind Antriebe vorgesehen, mit denen Luft unter die Flügel geblasen werden kann. Die Luft wird von dem Antrieb in die hohlen Flügel geblasen, und von dort kann die Luft über schwenkbare Austritte am vorderen und hinteren Ende des Flügels nach unten gelenkt werden, um einen Auftrieb zu erzielen. Auf diese Art und Weise wird vor bzw. während des Startes des Fahrzeuges ein statischer Bodeneffekt erzeugt, so daß das Fahrzeug zum Starten aus dem Wasser herausgehoben wird. Hat das Bodeneffekt-Fahrzeug Fahrt aufgenommen, werden die schwenkbaren Austritte am vorderen und hinteren Ende des Flügels wieder eingeschwenkt. Nachteilig bei dieser Konstruktion ist, daß zum Starten und Landen eine relativ hohe Antriebsleistung benötigt wird.

Der Erfindung liegt die Aufgabe zugrunde, ein Bodeneffekt-Fahrzeug, wie es aus der GB-A-936-763 bekannt ist, zu schaffen, wobei die Antriebsleistung trotz großer Fahrzeugmasse verhältnismäßig gering ist und der Bodeneffekt schon bei sehr geringer Fahrgeschwindigkeit wirksam wird.

Erfindungsgemäß wird diese Aufgabe dadurch gelöst, daß mindestens einigen Flügelstummeln ein Schuberzeuger derart vorgeschaltet ist, daß dieser Schuberzeuger über einen Luftströmungskanal mit dem jeweiligen Luftstauraum verbunden ist bzw. verbindbar ist, wobei der Schuberzeuger sowohl den Vortrieb des Fahrzeuges als auch den Auftrieb bewirkt.

Bei dem erfindungsgemäßen Bodeneffekt-Fahrzeug werden über die Länge des langgestreckten Rumpfes mehrere Flügelstummelpaare hintereinander angeordnet, so daß der Bodeneffekt über die gesamte Länge der Fahrgastkabine wirksam werden kann, indem die Luftströmung jedes Schuberzeugers dem jeweiligen Luftstauraum unter den Flügelstummeln zugeführt wird. Durch die erfindungsgemäße Maßnahme ist es überdies möglich, die Antriebsleistung trotz großer Fahrzeugmasse verhältnismäßig gering zu halten. Schon bei geringer Fahrgeschwindigkeit wird hinreichend Auftrieb erzeugt, um das Fahrzeug über der Wasseroberfläche gleiten zu lassen.

Bei einer Fahrzeugversion, bei der die Fahrgastkabine etwa 20 bis 30 Personen faßt, können beispielsweise drei Flügelstummelpaare hintereinander angeordnet sein. Es ist jedoch auch möglich, die Fahrgastkabine für 100 und mehr Personen auszulegen und dann entsprechend länger auszubilden. Bei der längeren Version werden dann zweckmäßig fünf oder mehr Flügelstummelpaare an den Seiten der Fahrgastkabine angebracht.

Vorzugsweise sind die freien äußeren Enden der Flügelstummel an beiden Außenseiten mit je einem gemeinsamen, in Fahrtrichtung liegenden Schwimmer verbunden. Dadurch wird erstens die Schwimmstabilität im Stand des Fahrzeugs bzw. bei geringen Geschwindigkeiten, bei denen der Bodeneffekt noch nicht eingetreten ist, erhöht. Zweitens wird aber auch aufgrund der besseren mechanischen Stabilität der Fahrkomfort bei größeren Geschwindigkeiten erhöht, bei denen das Fahrzeug aufgrund des Bodeneffektes von der Wasseroberfläche abhebt.

Die Unterseiten der Schwimmer können zur besseren Ablösung der Wasserströmung mehrfach abgesetzt sein, wobei die abgesetzten Bereiche jeweils in Fahrtrichtung ansteigen. Dadurch wird das Gleitverhalten der Schwimmer im Wasser verbessert.

Zum Manövrieren des Fahrzeugs ist zweckmäßig am hinteren Ende der Fahrgastkabine mindestens ein Seitenleitwerk mit Seitenruder angeordnet.

Zur Verbesserung der Manövrierfähigkeit sind vorzugsweise zwei parallele, im Abstand zueinander angeordnete Seitenleitwerke mit Seitenrudern vorgesehen.

Zum Ein- und Ausstieg der Fahrgäste kann am hinteren Ende der Fahrgastkabine eine Tür vorgesehen sein, die bei einer bevorzugten Ausführungsform bei spielsweise zwischen den beiden Leitwerken liegt.

Die Tür kann um eine untere, quer zur Längsachse der Fahrgastkabine liegende Achse schwenkbar sein, wobei die Innenseite der Tür in deren geöffnetem, heruntergeklapptem Zustand als Laufsteg zwischen dem Kabineninnenraum und einem Anleger dienen kann.

Um auch bei geringen Geschwindigkeiten, wenn das Fahrzeug noch auf dem Wasser schwimmt, eine gute Manövrierfähigkeit zu gewährleisten, kann sich der untere Abschnitt des jeweiligen Seitenruders so weit nach unten erstrecken, daß er zumindest im schwimmenden Zustand des Fahrzeugs ins Wasser eintaucht. Der untere Abschnitt des jeweiligen Seitenruders wirkt dabei wie das Ruder eines Schiffes.

Um das erfindungsgemäße Bodeneffekt-Fahrzeug rationell in verschiedenen Größen herstellen zu können, kann das Fahrzeug in Modul-Bauweise erstellt werden. Dabei ist es möglich, daß jeweils ein Fahrgastkabinenabschnitt mit einem zugehörigen Flügelstummelpaar ein Baumodul bildet.

Alternativ kann aber auch die Fahrgastkabine als gesondertes zentrales Teil hergestellt werden, während nur die einzelnen Flügelstummel einschließlich Schuberzeuger je ein Modulteil bilden. Je nach der geforderten Schubkraft können an einem einzigen Flügelstummel ein oder mehrere Schuberzeuger vorgesehen sein.

Aus strömungstechnischen Gründen kann das vordere Flügelstummelpaar ohne Schuberzeuger ausgebildet sein.

Die Erfindung ist in der Zeichnung beispielsweise veranschaulicht und im nachstehenden im einzelnen anhand der Zeichnung beschrieben. Es zeigen:
- Fig. 1: ein Ausführungsbeispiel eines schwimmfähigen Bodeneffekt-Fahrzeugs für ca. 20 bis 30 Personen mit drei Flügelstummelpaaren,
- Fig. 2: eine Draufsicht auf das Bodeneffekt-Fahrzeug gemäß Fig. 1 und
- Fig. 3: eine Frontansicht des Bodeneffekt-Fahrzeuges gemäß Fig. 1 und 2.

Nach der Zeichnung besteht das Bodeneffekt-Fahrzeug 1 aus einer langgestreckten Fahrgastkabine 2, über deren Länge in gleichmäßigen Abständen verteilt auf beiden Seiten Flügelstummel 3 angeordnet sind.

Die Fahrgastkabine 2, die das zentrale Bauteil des Bodeneffekt-Fahrzeugs 1 bildet, sitzt auf einem bootsartigen Schwimmer bzw. ist an seiner unteren Seite selbst nach Art eines Bootskörpers 4 konzipiert.

Die Fahrgastkabine 2, die bei dem in der Zeichnung dargestellten Ausführungsbeispiel für etwa 20 bis 30 Passagiere ausgelegt ist, ist im vorderen Bereich, ähnlich wie bei einem Flugzeug, mit einem Cockpit 5 versehen, an welches sich nach hinten in der Zeichnung nicht dargestellte, hintereinander angeordnete Sitzreihen anschließen. Für die Fahrgäste sind auf bei.den Seiten der Fahrgastkabine Fenster 6 vorgesehen.

Hinter dem Cockpit 5 sind auf beiden Seiten der Fahrgastkabine 2 Türen 7 vorgesehen, durch welche im Notfalle die Insassen ein- und aussteigen können.

Wenn im Bereich der Anlegestelle ein größerer stationärer Anleger vorhanden ist, so können die Insassen durch eine am Ende der Fahrgastkabine 2 vorgesehene Schwenktür 8 ein- und aussteigen. Die Schwenktür ist um eine untere, quer zur Längsachse der Fahrgastkabine 2 liegende Achse 9 schwenkbar. Im heruntergeklappten, geöffneten Zustand der Schwenktür, bei der die Außenfläche der Tür auf dem Anleger aufliegt, dient die Innenseite der Tür als Laufsteg für die Fahrgäste, so daß diese bequem ein- und aussteigen können.

Die paarweise auf beiden Seiten der Fahrgastkabine 2 angeordneten Flügelstummel 3 sind an den Seitenflächen der Fahrgastkabine 2 befestigt. Bei dem in der Zeichnung dargestellten Ausführungsbeispiel sind drei hintereinander angeordnete Flügelstummelpaare vorgesehen.

Jedem Flügelstummel 3 ist ein Schuberzeuger 10 vorgeschaltet. Dieser besteht aus einem Propeller 11, der über einen im Bereich der Flügelstummel sitzenden Motor 12 angetrieben wird. Jeder Propeller 11 ist von einem Einlaufdiffusor 13 umgeben, von dem aus ein Luftströmungskanal 14 unter den zugeordneten Flügelstummel 3 führt. Auf diese Weise wird erreicht, daß die von dem Propeller 11 erzeugte Luftströmung nicht nur den Vortrieb des Fahrzeugs bewirkt, sondern gleichzeitig auch einen Luftstau unter dem jeweiligen Flügelstummel erzeugt, wodurch unmittelbar ein kräftiger Auftrieb durch Bodeneffekt erzeugt wird und damit einhergehend sich eine rasche Geschwindigkeitszunahme einstellen kann. Damit sich der Luftstau wirksam ausbilden kann, sind die Flügelstummel derart ausgebildet, daß sie einen definierten Luftstauraum überdecken. An den Rückseiten der Flügelstummel sind schwenkbare Klappen 15 vorgesehen, mit welchen der Staueffekt variiert werden kann.

Die Flügelstummel sind in der Draufsicht trapezförmig ausgebildet, wobei die längere Grundseite an die Fahrgastkabine 2 angrenzt.

Die Flügelstummel 3 sind in relativ kurzen Abständen an der Fahrgastkabine 2 hintereinander angeordnet. Die nach außen weisenden, der Trapezgrundseite gegenüberliegenden Parallelseiten sind relativ kurz ausgebildet, so daß die Flügelstummel nach außen relativ spitz zulaufen.

Die äußeren Enden der Flügelstummel 3 sind an den Außenseiten an je einem gemeinsamen, in Fahrtrichtung liegenden Schwimmer 16 befestigt. Die beiden Schwimmer 16 sind an ihren Unterseiten mehrfach abgesetzt, wobei die abgesetzten Bereiche 17 jeweils in Fahrtrichtung ansteigen.

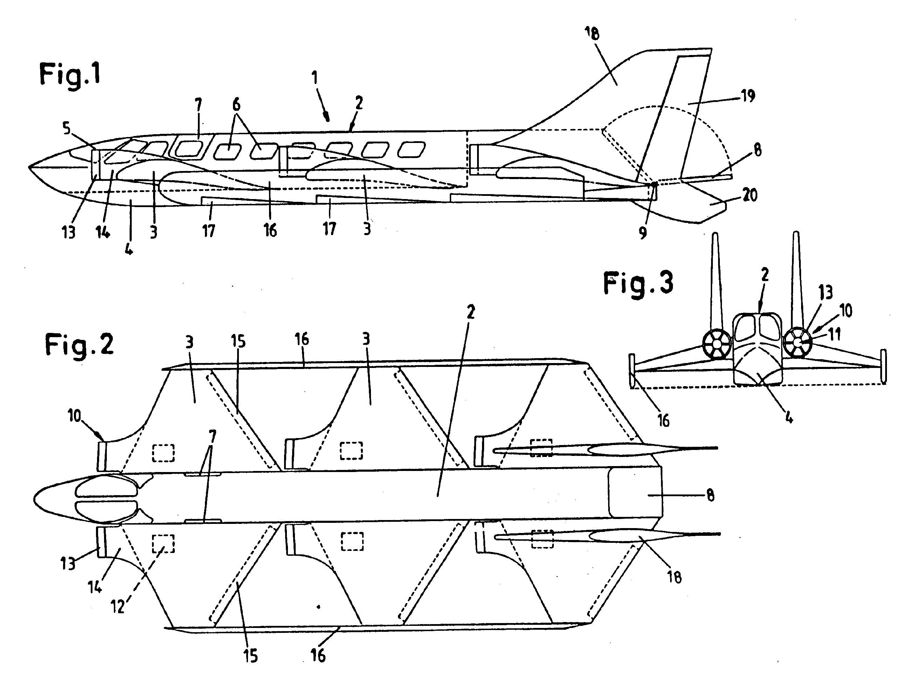

Zu beiden Seiten des hinteren Endes der Fahrgastkabine 2 sind zwei parallele, im Abstand zuei nander angeordnete Seitenleitwerke 18 mit je einem Seitenruder 19 angeordnet. Wie insbesondere aus Fig. 2 zu erkennen ist, sind die Seitenleitwerke 18 an den beiden hinteren Flügelstummeln 3 befestigt. Der untere Abschnitt 20 jedes Seitenruders 19 erstreckt sich so weit nach unten, daß er im schwimmenden Zustand des Fahrzeugs ins Wasser eintaucht und somit bei geringen Geschwindigkeiten zum Manövrieren des Fahrzeugs dienen kann.

Die beiden Seitenleitwerke sind so weit voneinander entfernt, daß die zwischen diesen liegende Schwenktür 8 bequem auf- und zugeschwenkt und zum Ein- und Aussteigen der Fahrgäste benutzt werden kann.

## Patentansprüche

1. Schwimmfähiges Bodeneffekt-Fahrzeug mit mindestens einem Schuberzeuger (10) und einer langgestreckten Kabine (2), die für eine größere Anzahl von Fahrgästen ausgebildet ist, welche auf einem bootsartigen Schwimmer sitzt bzw. als Bootskörper ausgebildet ist und an welcher in gleichmäßigen Abständen über die Länge verteilt beiderseitig angeordnete Flügelstummel (3) vorgesehn sind, die an ihrer Unterseite einen Luftstauraum umschließen, **dadurch gekennzeichnet,** daß mindestens einigen Flügelstummeln (3) ein Schuberzeuger (10) derart vorgeschaltet ist, daß dieser Schuberzeuger (10) über einen Luftströmungskanal (14) mit dem jeweiligen Luftstauraum verbunden ist, bzw. verbindbar ist, wobei der Schuberzeuger sowohl den Vortrieb des Fahrzeugs, als auch den Auftrieb bewirkt.

2. Schwimmfähiges Bodeneffekt-Fahrzeug nach Anspruch 1, **dadurch gekennzeichnet, daß die** freien Enden der Flügelstummel (3) an den beiden Außenseiten an gemeinsamen, in Fahrtrichtung liegenden Schwimmern (16) befestigt sind.

3. Schwimmfähiges Bodeneffekt-Fahrzeug nach Anspruch 2, **dadurch gekennzeichnet,** daß die Unterseiten der Schwimmer (16) mehrfach abgesetzt sind, wobei die abgesetzten Bereiche (17) jeweils in Fahrtrichtung ansteigen.

4. Schwimmfähiges Bodeneffekt-Fahrzeug nach einem der Ansprüche 1 bis 3, **dadurch gekennzeichnet,** daß am hinteren Ende der Fahrgastkabine (2) mindestens ein Seitenleitwerk (18) mit Seitenruder (19) angeordnet ist.

5. Schwimmfähiges Bodeneffekt-Fahrzeug nach Anspruch 4, **dadurch gekennzeichnet,** daß an dem hinteren Ende der Fahrgastkabine (2) zwei parallele, im Abstand zueinander angeordnete Seitenleitwerke (18) mit Seitenruder (19) vorgesehen sind.

6. Schwimmfähiges Bodeneffekt-Fahrzeug nach Anspruch 4 oder 5, **dadurch gekennzeichnet,** daß sich der untere Abschnitt (20) des jeweiligen Seitenruders (19) so weit nach unten erstreckt, daß er zumindest im schwimmenden Zustand des Fahrzeugs (1) ins Wasser eintaucht.

7. Schwimmfähiges Bodeneffekt-Fahrzeug nach Anspruch 5 oder 6, **dadurch gekennzeichnet,** daß das zwischen den beiden Seitenleitwerken liegende hintere Ende der Fahrgastkabine (2) mit einer als Ein- und Ausstieg dienenden Schwenktür (8) versehen ist.

8. Schwimmfähiges Bodeneffekt-Fahrzeug nach Anspruch 7, **dadurch gekennzeichnet,** daß die Schwenktür (8) um eine untere, quer zur Längsachse der Fahrgastkabine (2) liegende Achse (9) schwenkbar ist und daß die Innenseite der Schwenktür (8) in deren geöffnetem, heruntergeklapptem Zustand als Laufsteg zwischen dem Kabineninnenraum und einem Anleger vorgesehen ist.

9. Schwimmfähiges Bodeneffekt-Fahrzeug nach einem der Ansprüche 1 bis 8, **dadurch gekenn- zeichnet,** daß das Fahrzeug (1) in Modul-Bauweise erstellbar ist.

10. Schwimmfähiges Bodeneffekt-Fahrzeug nach Anspruch 9, **dadurch gekennzeichnet,** daß jeweils ein Fahrgastkabinenabschnitt mit einem zugehörigen Flügelstummelpaar (3) ein Modul bildet.

11. Schwimmfähiges Bodeneffekt-Fahrzeug nach Anspruch 9, **dadurch gekennzeichnet,** daß die einzelnen Flügelstummel (3) einschließlich Schuberzeuger (10) je ein Modulteil bilden.

12. Schwimmfähiges Bodeneffekt-Fahrzeug nach einem der Ansprüche 1 bis 11, **dadurch gekennzeichnet,** daß das vordere Flügelstummelpaar nicht mit Schuberzeugern (10) ausgerüstet ist.

## Claims

1. Floatable groundeffect-vehicle with at least one thrust generator (10) and an extended cabine (2) designed for a bigger number of passengers which sits on a boat-like pontoon respectively which is designed as a boat and on which in equal distances over the whole length at both sides stub wings (3) are intended circumfering on their under side an air plenum, characterized in that a thrust generator (10) is installed before at least several stub wings (3) in such a way that these thrust generators (10) are connected respectively are connectable with the corresponding air plenum by an air flow channel (14) whereby the thrust generator effects as well the propulsion of the vehicle as the elevation.

2. Floatable groundeffect vehicle according to claim 1, characterized in that the free ends of the stub wings (3) at both outer sides are fixed on common, in driving direction situated pontoons (16).

3. Floatable groundeffect-vehicle according to claim 2, characterized in that the undersides of the pontoons (16) are multiple diposed whereby the respectively disposed regions (17) rise in the given driving direction.

4. Floatable groundeffect-vehicle according to one of the claims 1 to 3, characterized in that at the backside of the passenger's cabine (2) at least one rudder assembly (18) is situated with a rudder (19).

5. Floatable groundeffect-vehicle according to claim 4, characterized in that at the backside of the passenger's cabine (2) two parallel in the distance to each other situated rudder assemblies (18) with a rudder (19) are provided.

6. Floatable groundeffect-vehicle according to claim 4 or 5, characterized by that the under sector (20) of the corresponding rudder (19) is extending so wide beneath that it dips into water at least when the vehicle is floating.

7. Floatable groundeffect-vehicle according to claim 5 or 6, characterized in that the backside of the passenger's cabine (2) which is situated between the both rudder assemblies has a rotating door (8) for entry or exit.

8. Floatable groundeffect-vehicle according to claim 7 characterized in that the rotating door (8) is rotatable around an under traverse to the longitudinal axis of the passenger's cabine (2) axis (9) and that the inner side of the rotating door (8) in the opened and turned down mode is provided as a gangway between the inner room of the cabine and a landing stage.

9. Floatable groundeffect-vehicle according to one of claims 1 to 8, characterized in that the vehicle (1) is producible in a module-construction.

10. Floatable groundeffect-vehicle according to claim 9, characterized in that respectively one segment of the passenger's cabine forms a module with a corresponding pair of stub wings (3).

11. Floatable groundeffect-vehicle according to claim 9, characterized in that the individual stub wings (3) inclusive the corresponding thrust generator (10) form one module.

12. Floatable groundeffect-vehicle according to one of the claims 1 to 11, characterized in that the front pair of stub wings is not equipped with thrust generators (10).

## Revendications

1. Véhicule flottant à effet de sol, comportant au moins un générateur de poussée (10) et une cabine (2) de forme très allongée qui est construite pour recevoir un grand nombre de passagers, est placée sur un flotteur semblable à un bateau ou est réalisée sous forme de coque de bateau et sur laquelle sont prévus des tronçons d'aile (3) qui sont disposés des deux côtés, répartis sur toute la longueur à intervalles réguliers et qui renferment du côté inférieur une chambre d'accumulation d'air, caractérisé en ce qu'un générateur de poussée (10) est disposé en tête d'au moins quelques tronçons d'aile (3) de telle manière que ce générateur de poussée (10) soit en communication ou puisse être mis en communication avec la chambre d'accumulation d'air correspondante par l'intermédiaire d'un conduit d'écoulement d'air (14), le générateur de poussée assurant ainsi à la fois la propulsion du véhicule et sa sustentation.

2. Véhicule flottant à effet de sol selon la revendication 1, caractérisé en ce que les extrémités libres des tronçons d'aile (2) sont fixées, sur les deux côtés extérieurs, à des flotteurs communs (16) disposés dans la direction de la marche.

3. Véhicule flottant à effet de sol selon la revendication 2, caractérisé en ce que les côtés inférieurs des flotteurs (16) sont étagés plusieurs fois, chacune des régions en retrait (17) étant en pente ascendante dans le sens de la marche.

4. Véhicule flottant à effet de sol selon l'une quelconque des revendications 1 à 3, caractérisé en ce qu'au moins un empennage vertical (18) avec gouvernail de direction (19) est disposé à l'extrémité arrière de la cabine des passagers (2).

5. Véhicule flottant à effet de sol selon la revendication 4, caractérisé en ce que deux empennages verticaux (18) avec gouvernail de direction (19), disposés parallèlement à distance l'un de l'autre, sont prévus à l'extrémité arrière de la cabine des passagers (2).

6. Véhicule flottant à effet de sol selon la revendication 4 ou 5, caractérisé en ce que la partie inférieure (20) de chaque gouvernail de direction (19) s'étend suffisamment loin vers le bas pour plonger dans l'eau, au moins dans l'état flottant du véhicule (1).

7. Véhicule flottant à effet de sol selon la revendication 5 ou 6, caractérisé en ce que l'extrémité arrière de la cabine des passagers (2), située entre les deux empennages verticaux, est équipée d'une porte pivotante (8) servant à l'accès et à la descente.

8. Véhicule flottant à effet de sol selon la revendication 7, caractérisé en ce que la porte pivotante (8) peut pivoter autour d'un axe inférieur (9) dirigé perpendiculairement à l'axe longitudinal de la cabine des passagers (2), et en ce que la face interne de la porte pivotante (8) est prévue pour servir, dans la position ouverte de la porte, basculée vers le bas, de passerelle entre l'intérieur de la cabine et un embarcadère.

9. Véhicule flottant à effet de sol selon l'une quelconque des revendications 1 à 8, caractérisé en ce que le véhicule (1) peut être fabriqué de manière modulaire.

10. Véhicule flottant à effet de sol selon la revendication 9, caractérisé en ce qu'un tronçon de la cabine des passagers constitue chaque fois un module avec une paire associée de tronçons d'aile (3).

11. Véhicule flottant à effet de sol selon la revendication 9, caractérisé en ce que les tronçons d'aile (3) individuels, y compris les générateurs de poussée (10), constituent chaque fois un module.

12. Véhicule flottant à effet de sol selon l'une quelconque des revendications 1 à 11, caractérisé en ce que la paire avant de tronçons d'aile n'est pas équipée de générateurs de poussée (10).
